# EUROPÄISCHE PATENTSCHRIFT

(11) **EP 2 567 161 B1**
(45) Veröffentlichungstag und Bekanntmachung des Hinweises auf die Patenterteilung: **01.07.2020**
(21) Anmeldenummer: 11743421.7
(22) Anmeldetag: 05.05.2011
(51) Int. Cl.: B65D 25/04, F25B 17/08, B65D 3/06, B65D 3/30, B65D 77/04, F25B 35/04

(54) **UNTERDRUCKBEHÄLTER**
NEGATIVE-PRESSURE TANK
RÉSERVOIR À VIDE

(30) Priorität: 05.05.2010 DE 102010019907
(43) Veröffentlichungstag der Anmeldung: 13.03.2013
(73) Patentinhaber: InvenSor GmbH, 13355 Berlin (DE)
(72) Erfinder: LAUFER, Andrej, 10369 Berlin (DE); SONNENBERG, Jan, 12555 Berlin (DE); PAULUSSEN, Sören, 10405 Berlin (DE); BRAUNSCHWEIG, Niels, 10119 Berlin (DE)
(74) Vertreter: Hertin und Partner Rechts- und Patentanwälte PartG mbB
(86) Internationale Anmeldenummer: PCT/DE2011/075099
(87) Internationale Veröffentlichungsnummer: WO 2012/000494

(56) Entgegenhaltungen:
- EP-A1- 1 143 210
- EP-A1- 1 645 819
- EP-A2- 1 507 125
- WO-A2-2010/000256
- DE-A1- 2 855 608
- DE-A1-102004 053 436
- DE-A1-102007 012 113
- US-A- 3 480 200

## Beschreibung

Die Erfindung betrifft einen Unterdruckbehälter mit einer Trennwand, wobei die Trennwand mindestens zwei Wände und der Unterdruckbehälter mindestens zwei Kammern umfasst und in der Trennwand ein Freiraum vorliegt, in dem ein Umgebungsdruck herrscht. Weiterhin betrifft die Erfindung eine Sorptionsmaschine mit einem Unterdruckbehälter.

Im Stand der Technik sind Kältemaschinen beschrieben, die im Allgemeinen der Beheizung und/oder der Kühlung von Gebäuden dienen. Kältemaschinen realisieren thermodynamische Kreisprozesse, bei denen beispielsweise Wärme unterhalb der Umgebungstemperatur aufgenommen und bei einer höheren Temperatur abgegeben wird. Die thermodynamischen Kreisprozesse ähneln denen einer Wärmepumpe. Im Stand der Technik bekannte Kältemaschinen sind z. B. Adsorptionskälteanlagen, Diffusions- Absorptionskältemaschinen, Adsorptionskälteanlagen beziehungsweise Feststoffsorptionswärmepumpen sowie Kompressionskälteanlagen.

Die Adsorptionskältemaschine besteht mindestens aus einer Ad-/Desorber-Einheit, einem Verdampfer, einem Kondensator und/oder einer kombinierten Verdampfer/Kondensator-Einheit, die in einem gemeinsamen Behälter oder in getrennten Behältern untergebracht sind, welche dann mit Rohren o. ä. für die Kältemittelströmung miteinander verbunden sind. Der Vorteil der Sorptionsmaschinen gegenüber konventioneller Wärmepumpentechnik liegt darin, dass der Ablauf der Adsorption/Desorption allein durch die Temperierung des Sorptionsmittels erfolgt. Somit kann der Behälter der Adsorptionsmaschine hermetisch und gasdicht abgeschlossen sein. Bei Verwendung von beispielsweise Wasser als Kältemittel arbeitet die Adsorptionskältemaschine vorzugsweise im Unterdruckbereich.

Die in einer Adsorptionsmaschine stattfindende Adsorption beschreibt einen physikalischen Prozess, bei dem sich ein gasförmiges Kältemittel (beispielsweise Wasser) an einen Feststoff anlagert. Die Desorption des Kältemittels, das heißt das Lösen des Kältemittels von dem Feststoff, benötigt wiederum Energie. In einer Adsorptionskältemaschine wird das Kältemittel, welches bei niedriger Temperatur und niedrigem Druck Wärme aufnimmt und bei höherer Temperatur und höherem Druck Wärme abgibt, so gewählt, dass mit der Ad- beziehungsweise Desorption eine Aggregatzustandsänderung einhergeht. Als Adsorptionsmittel sind im Stand der Technik Stoffe beschrieben, die feinporös sind und demzufolge eine sehr große innere Oberfläche besitzen. Vorteilhafte Materialien sind Aktivkohle, Zeolithe, Aluminiumoxid oder Silikagel, Aluminiumphosphate, Silika- Aluminiumphosphate, Metall-Silika-Aluminiumphosphate, Mesostruktur Silikate, Metall-organische Gerüste und/oder mikroporöses Material, umfassend mikroporöse Polymere.

Im Prozess der Adsorptionsmaschine muss die Adsorptionswärme und die Kondensationswärme aus der Anlage abgeführt werden. Dies geschieht in der Regel über ein strömendes Wärmeträgermedium, das diese Wärme zu einer Wärmesenke transportiert, z.B. zu einem Rückkühlwerk, welches die Wärme an die Umgebungsluft abgibt. Wird jedoch die Adsorptionswärme und/oder die Kondensationswärme nicht bzw. schlecht abgeführt, würden die Temperaturen und damit die Drücke innerhalb der Adsorptionsmaschine steigen und der Adsorptionsprozess käme zum Erliegen. Somit kann der Wirkungsgrad einer Adsorptionsmaschine durch eine verbesserte Wärmeübertragung erheblich erhöht werden, was zwangsläufig auch die Wirtschaftlichkeit der Anlage verbessert.

Für die Verdampfung in Sorptionsmaschinen ist in der Regel ein Vakuumbehälter notwendig, da z. B. Wasser als Kältemittel eingesetzt werden kann und demgemäß niedrige Drücke erforderlich sind. Die bekannten klassischen Vakuumbehälter weisen einen zumeist zylindrischen Hauptkörper auf, der unter anderem durch einen Mantel aus Metall gebildet wird, wobei dieser mindestens eine Dicke von 4 oder 5 mm aufweist. Derartige Vakuumbehälter sind im Vergleich zu anderen Vorrichtungsteilen von Sorptionsmaschinen sehr schwer. Die Einbauten in diese Vakuumbehälter sind häufig quaderförmig. Aus diesen Gründen ist der Raum, den der Vakuumbehälter bereitstellt, oft nicht effektiv zu nutzen. Dies ist für die Leistungsdichte und für die Materialkosten, aber auch für die thermische Masse nachteilig.

Im Stand der Technik sind Druckbehälter beschrieben, deren Druck im Inneren über oder unter dem Umgebungsdruck liegt. Um den auftretenden Drücken standzuhalten, weisen die Behälter beispielsweise eine dicke Wandung auf, womit auch ein hohes Grundgewicht verbunden ist. Auch die Herstellungskosten der Druckbehälter sind durch die Abmaßung des Behälters und den Materialkosten hoch. Wenn der Druckbehälter in einer Sorptionsmaschine Verwendung findet, muss außerdem eine thermische Isolierung des Behälters erfolgen. Hierfür ist ein separater zusätzlicher Aufwand (z. B. Isolationselemente aus Isolationsmaterial) notwendig.

Die US 3480200A gehört zum Stand der Technik und offenbart ein Unterdruckbehälter mit einer Trennwand wobei die Trennwand zwei Kammern trennt.

Die DE 2855608A1 gehört ebenfalls zum Stand der Technik und beschreibt eine Vakuumpumpe mit zwei getrennten Arbeitsräumen.

Die DE 10 2007 012113 A1 ist Teil des Standes der Technik und beschreibt einen Unterdruckbehälter gemäß dem Oberbegriff von Anspruch 1.

Auch die DE 10 2004 053 436 A1 gehört zum Stand der Technik und offenbart eine Adsorptionswärmepumpe für PKW-Klimaanlagen, wobei zwei Adsorberkammern, ein Kondensator und ein Verdampfer von einer nicht freitragenden Vakuumhülle umgeben sind.

In der EP 1 645 819 A1 beschreibt eine Vakuum- Resorptionsvorrichtung, wobei ein Vakuumgehäuse einen mindestens doppelwandigen, den kondensatorbildenden Bereich aufweist.

Die EP 1 507 125 A2 gehört zum Stand der Technik und beschreibt ein Behältnis mit einer Vakuumkammer, wobei eine Trennwand über einen Verdampferraum angeordnet ist.

Die WO 2010/000256 A2 beschreibt einen selbsttragenden Vakuumbehälter für Resorptionsmaschinen, der über Versteifungsmittel verfügt und sich nicht auf die Einbauten abstützen muss.

Insbesondere bei Sorptionsmaschinen mit mehreren Kammern, bei denen in den einzelnen Kammern verschiedene Temperaturen und entsprechende unterschiedliche Drücke vorliegen, kommt es bei unzureichender thermischer Isolierung zwischen den Kammern zu einem ungewünschten Wärmeaustausch zwischen den Kammern. Dies führt zu einer Verringerung des Wirkungsgrades solcher Maschinen. Ferner kommt es bei einer schweren baulichen Ausführung der Trennwand zwischen den Kammern ebenfalls zu einer Verschlechterung des Wirkungsgrades, da die Wände als zusätzliche, aber unerwünschte thermische Masse wirken und so den Wirkungsgrad der Maschinen reduzieren. Ferner sind natürlich schwere Ausführungen der Trennwände ein unerwünschtes zusätzliches Gewicht.

Aufgabe der Erfindung ist es demgemäß einen Behälter bereitzustellen, der nicht die Nachteile und Mängel des Standes der Technik aufweist, ein geringes Gewicht besitzt, auftretenden Drücken standhält, eine verbesserte thermische Isolierung zwischen den Kammern aufweist und verringerte thermische Massen für die Adsorptionsprozesse darstellt.

Die Aufgabe wird durch die Merkmale des unabhängigen Anspruchs 1 gelöst.

Vorteilhafte Ausführungsformen ergeben sich aus den Unteransprüchen.

Es wird ein Unterdruckbehälter mit mindestens einer Trennwand bereitgestellt, wobei die Trennwand mindestens zwei Wände und der Unterdruckbehälter mindestens zwei Kammern umfasst, wobei die Trennwand die Kammern trennt und die beiden Wände der Trennwand miteinander verbunden sind, wobei mindestens ein Freiraum in der Trennwand vorliegt, wobei die Trennwand eine sich unter Unterdruck verformende Trennwand ist, wobei die Wände der Trennwand an mindestens einem Punkt oder Linie verbunden sind und wobei der Freiraum einen Druck aufweist, der einem Umgebungsdruck entspricht.

Der erfindungsgemäße Unterdruckbehälter weist nicht die Nachteile und Mängel des Standes der Technik. Durch die überraschende Konstruktion der Trennwände kann ein leichter, aber druckstabiler Unterdruckbehälter bereitgestellt werden. Außerdem ist der Behälter wartungsfreier als die im Stand der Technik offenbarten Behälter, da die Trennwände in sich stabil (selbststabilisierend) sind und durch die Druckkräfte nicht beschädigt werden.

Ferner weist der Behälter eine verbesserte thermische Isolierung zwischen den Kammern auf. Dies und die ebenfalls verringerte thermische Masse des Behälters führt zu einer Wirkungsgrad-Erhöhung der Maschine. Hierdurch kann auf die Verwendung einer zusätzlichen Isolationsschicht verzichtet werden, die beispielsweise auf eine Trennwand aufbringbar sind. Die Isolationsschichten können zu durch die hohen Temperaturen und Drücke beschädigt werden, wodurch hohe Wartungsintervalle nötig sind. Bei einer Beschädigung muss der vollständige Unterdruckbehälter ausgetauscht werden, was wiederum mit hohem Aufwand und Kosten verbunden ist. Im Falle des erfindungsgemäßen Unterdruckbehälters ist dies nicht nötig, da auf zusätzliche Isolationsschichten vollständig verzichtet werden kann. In dem Unterdruckbehälter kann eine oder mehrere Trennwände vorliegen, wobei auch eine oder mehrere Kammern in dem Unterdruckbehälter integriert sein können.

Die Trennwand kann zur Trennung von mindestens zwei Kammern eines Unterdruckbehälters verwendet werden, wobei die Trennwand mindestens zwei Wände umfasst, die an mindestens einem Punkt miteinander verbunden sind, wobei mindestens zwei Freiräume in der Trennwand bestehen. Die Trennwand bildet eine mechanische Struktur, die durch eine Verbindung der beiden Wände der Trennwand in mindestens einem Punkt entsteht, wobei die beiden Wände der Trennwand mindestens zwei Freiräume umschließen. Die Freiräume entstehen bevorzugt durch die Verbindung der beiden Wände in mindestens einem Punkt. Die Freiräume sind bevorzugt hermetisch zu den Kammern abgedichtet, wobei in den Freiräumen bevorzugt ein Gasgemisch, bevorzugt Luft vorliegt und ein Umgebungsdruck herrscht. Der Umgebungsdruck ist bevorzugt höher als der Druck, der in den Kammern vorliegt. Es kann jedoch auch bevorzugt sein, dass der Umgebungsdruck in den Freiräumen gleich dem der Kammern ist. Es können mithin leichte und stabile Behälter bereitgestellt werden.

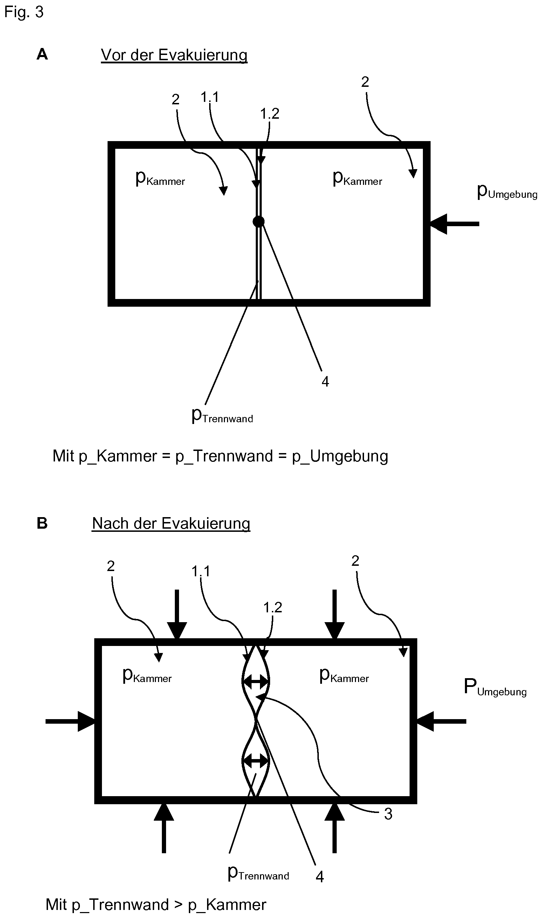

Die Trennwand wird durch eine mechanische Struktur ausgeführt, die im Inneren ein höheres Druckniveau hat als die Unterdruckkammern selbst aufweist. Die Trennwand weist zwei Wände auf, die partiell verbunden sind, so dass ein Freiraum in der Trennwand vorliegt. Ein Freiraum ist im Sinne der Erfindung insbesondere ein Raum, der dadurch entsteht, dass zwei Seitenflächen oder Wände einer Trennwand miteinander verbunden werden. Das heißt, der Freiraum besteht zwischen den Wänden der Trennwand. In dem Freiraum sind keine Bauteile oder sonstige Vorrichtungen angeordnet (siehe auch Figur 3, Freiraum - Bezugszeichen 3).

In dem Freiraum liegt erfindungsgemäß ein Umgebungsdruck, d. h. ein atmosphärischer Druck vor. Der Fachmann weiß, dass der atmosphärische Druck in Abhängigkeit von Temperatur, Höhe und Lage variiert. Dem Fachmann stehen Mittel zur Verfügung, die eine Druckmessung erlauben, so dass einfach feststellbar ist, dass in der Trennwand ein zu den Kammern unterschiedlicher Druck vorliegt. Es ist bevorzugt, dass in der Trennwand ein im Wesentlichen höherer Drück als in mindestens einer Kammer vorliegt. Somit ist der Druck in den Freiräumen in der Trennwand bevorzugt höher oder gleich dem Druck, der in den Kammern vorliegt. Die Kammern können unterschiedliche Drücke aufweisen, wobei diese vorzugsweise zu dem in der Trennwand, bzw. Freiraum vorliegenden Druck unterschiedlich sind. Durch das Anlegen eines Druckes, insbesondere eines Unterdruckes erfährt die Trennwand eine Verformung, so dass sich das Volumen des Freiraums erhöht. Es formt sich durch den Unterdruck in den Kammern in der Trennwand eine sehr steife Struktur aus, die zusätzlich eine sehr gute thermische Isolierung zwischen den Kammern bewirkt (Isolationswirkung durch stehendes Gas z. B. Luft = keine Wärmeleitung oder Konvektion). Es ist bevorzugt, dass der Druck der Trennwand dem Umgebungsdruck entspricht.

Die Formulierung "im Wesentlichen" stellt für den Fachmann im Hinblick auf den Druck keine unklare Formulierung dar, da er durch die Gesamtoffenbarung der erfindungsgemäßen Lehre erkennt, dass der Druck in den Freiräumen der Trennwand bevorzugt zu dem in den Kammern unterschiedlich ist und diese Formulierung selbstverständlich kleine sowie große Druckunterschiede gleichermaßen erfasst. Die unterschiedlichen Drücke sind beispielsweise durch im Stand der Technik beschriebene Messverfahren bestimmbar.

In einer bevorzugten Ausführungsform liegt in dem Freiraum ein Fluid vor. Ein Fluid bezeichnet im Sinne der Erfindung insbesondere ein Gas oder eine Flüssigkeit. Es ist bevorzugt, dass in dem Freiraum Luft vorliegt. Als Luft wird im Sinne der Erfindung insbesondere das Gasgemisch der Erdatmosphäre bezeichnet. Trockene Luft umfasst Stickstoff, Sauerstoff, Argon, Kohlenstoffdioxid, Wasserstoff und andere Spurengase. Es hat sich überraschenderweise gezeigt, dass der Unterdruckbehälter weniger Eigenschwingungen aufweist und somit wartungsärmer ist.

Die Wände der Trennwand sind vorzugsweise als Bleche ausgeführt. Die erfindungsgemäße Lehre erlaubt es, für den Bau von Trennwänden Grobbleche (Stärke kleiner als 3 mm) aber auch Feinbleche zu verwenden. Feinbleche sind Bleche mit einer Stärke von kleiner als 2 mm oder bevorzugt kleiner als 1 mm. Es handelt sich bevorzugt um warm oder kalt fertig gewalztes Blech, das meist für Umformzwecke benutzt wird. Je nach der Stahlsorte können diese Feinbleche auch verzinnt, verzinkt, verkupfert, vernickelt, lackiert, emailliert oder kunststoffoberflächenbeschichtet sein. Es hat sich überraschenderweise herausgestellt, dass insbesondere durch Bleche eine dünne und somit leichte Trennwand bzw. ein Unterdruckbehälter mit einem geringen Gewicht hergestellt werden kann. Hierdurch ist dieser auch in Maschinen einsetzbar, die zuvor nicht für einen Unterdruckbehälter geeignet waren, da die im Stand der Technik offenbarten Behälter ein zu hohes Gewicht aufweisen.

Als "Wände" werden im Sinne der Erfindung insbesondere zwei Seitenflächen der Trennwand bezeichnet, die flächig aneinander liegen.

Die Wände weisen bevorzugt eine Stärke von weniger als 3 mm, besonders bevorzugt weniger als 2 mm und ganz besonders bevorzugt weniger als 1 mm auf. Insbesondere bedeutet dies, dass die Wände eine Stärke von weniger als 0,8 mm, bevorzugt weniger als 0,7 mm und besonders bevorzugt weniger als 0,6 mm (z. B. weniger als 0,4 mm; 0,2 mm oder weniger als 0,05 mm oder noch weniger), aufweisen. Hierdurch können dünnwandige Trennwände bereitgestellt werden, die trotz eines geringen Gewichts hohen Druckkräften standhalten können. Trennwände mit solchen geringen Wandstärken sind besonders vorteilhaft, da diese sehr leicht sind und dennoch in der Lage sind, den mechanischen Belastungen durch die Vakuumkräfte standzuhalten. Die Stärke kann auch nur einen Teil der Wände betreffen, so dass die Wand unterschiedlich starke Bereiche aufweist. Es hat sich gezeigt, dass durch die Verwendung der bevorzugten Wandstärken ein Unterdruckbehälter bereitgestellt werden kann, der geräuscharmer arbeitet.

Die Trennwand wird vorzugsweise zur Trennung von mindestens zwei Kammern in einem Druckbehälter, insbesondere einem Unterdruckbehälter verwendet. Der Fachmann weiß, dass Kammern in einem Druckbehälter hermetisch voneinander getrennt sind, d. h. die Trennwand stellt sinngemäß eine hermetische Barriere dar, die einen Raum des Druckbehälters in mindestens zwei Kammern trennt. In den Kammern herrscht vorzugsweise ein Unterdruck, d. h. ein Druck, der niedriger als der Umgebungsdruck ist. Es war völlig überraschend, dass eine Verformung der Trennwand durch Anlegen des Unterdruckes erstellt werden kann. Die Verformung kann auch durch z.B. Anlegen eines Überdruckes in der Trennwand erreicht werden. Es war völlig überraschend, dass mit den genannten erfindungsgemäßen und vor allem mit den bevorzugten Wandstärken Trennwände für Unterdruckbehälter bereitgestellt werden können, die sich unter den Kräften des Vakuums einkalkuliert verformt und dennoch vollständig funktionsbereit sind. Die einkalkulierte Verformung bedeutet, dass die Trennwände zwar implosionsresistent sind, aber sich unter Unterdruckbeaufschlagung deutlich verformen. Der durchschnittliche Fachmann ist bisher davon ausgegangen, dass derartige Trennwände in Unterdruckbehältern nicht verwendet werden können. Bisher sind derartige Trennwände für den genannten Einsatz nicht verwendet worden, da durch die Fachwelt eine Instabilität und Unsicherheit dieser unterstellt wurde. Es ist der Verdienst der Erfinder gezeigt zu haben, dass auch eine deutlich wahrnehmbare Verformung der Trennwände unter Druckbeaufschlagung bei dem erfindungsgemäßen Unterdruckbehälter nicht zu Funktionsausfällen oder anderen Nachteilen führt. Die Verformung ergibt sich aus dem Anlegen des Unterdrucks und kann daher als Folge von diesem definiert werden.

Die Wände der Trennwand sind vorzugsweise form- und/oder stoffschlüssig miteinander verbunden. Hierbei kann es vorteilhaft sein, die Wände lediglich partiell zu verbinden. Eine partielle Verbindung bezeichnet im Sinne der Erfindung insbesondere eine nicht vollflächige Verbindung der Wände. Die Wände sind zwar an den Seitenrändern miteinander verbunden, aber auf deren Fläche besteht nur mindestens eine punktuelle oder linienförmige Verbindung. Das heißt, zwischen den Seitenwänden der Trennwand liegt bevorzugt ein Freiraum vor. Durch die bevorzugte Verbindung der Wände kann die Eigenschwingung der Trennwände erheblich reduziert werden, so dass hierdurch keine Funktionseinbußen mehr entstehen.

Es ist zu betonen, dass die Trennwand nicht als Mehrkammersystem anzusehen ist. Es besteht zwischen den Wänden nur eine partielle Verbindung, wodurch nicht mehrere Kammern generiert werden, sondern lediglich ein Freiraum. Durch das Anlegen eines Unterdruckes entsteht eine Verformung der Trennwand, so dass der Freiraum vor und nach dem Anlegen des Druckes ein unterschiedliches Volumen aufweist.

Formschlüssige Verbindungen entstehen vorzugsweise durch das Ineinandergreifen von mindestens zwei Verbindungspartnern. Die formschlüssigen Verbindungen umfassen Schrauben, Nieten, Stifte oder Klemmen. Die Wände der Trennwand können beispielsweise mittels Schrauben verbunden werden, die die Flächen punktuell verbinden.

Weiterhin können die Wände mittels stoffschlüssiger Mittel verbunden werden. Stoffschlüssige Verbindungen werden durch atomare oder molekulare Kräfte zusammengehalten. Sie sind gleichzeitig nicht lösbare Verbindungen, die sich nur durch Zerstörung der Bauteile und/oder der Verbindungsmittel wieder lösen lassen. Stoffschlüssige Verbindungen umfassen Löten, Schweißen oder Kleben.

Der Fachmann weiß, dass formschlüssige oder stoffschlüssige Verbindungen, wie beispielsweise Schweißverbindungen in Form von einem oder mehreren Verbindungspunkten (z. B. Schweißpunkt) oder als linienförmige (z. B. Schweißnaht) oder flächige Verbindung ausgeführt werden können. Derartige Trennwände sind besonders leicht und weisen dennoch überraschenderweise eine gute Stabilität auf.

Um eine Strömung eines Fluids, insbesondere Wasserdampf von einer Kammer in eine weitere Kammer zu ermöglichen, kann es bevorzugt sein, dass die Trennwand mindestens eine Durchführung bzw. Öffnung für eine Strömung zwischen den Kammern aufweist. Hierbei kann es sich beispielsweise um eine Dampfklappe oder Dampfventil handeln. Die Dampföffnungen können vorteilhafterweise an einer Schweißstelle in die Trennwand eingefügt sein und ein Durchströmen des Dampfes ermöglichen. Der Begriff "Strömung" bezeichnet im Sinne der Erfindung einen Energie- und/oder Stoffaustausch, der insbesondere aufgrund von Diffusion oder Konvektion erfolgt. Es kann jedoch auch vorteilhaft sein, eine oder mehrere Dampföffnungen an eine andere Position in der Trennwand zu integrieren. Die Dampföffnungen können derart in die Trennwand integriert werden, dass ein optimaler Dampfaustausch zwischen den Kammern erfolgen kann.

In einer weiteren bevorzugten Ausführungsform kann es vorgesehen sein, dass die zusammengeführten Bleche eine unterschiedliche Materialzusammensetzung und/oder eine unterschiedliche Dimensionierung, wie z. B. eine unterschiedliche Dicke, aufweisen. D. h., die Trennwände können aus verschiedenen Blechen mit unterschiedlichen Charakteristika zusammengesetzt werden, wobei Charakteristika unterschiedliche Metallzusammensetzungen oder eine unterschiedliche Dimensionierung der Bleche bedeuten können oder aber eine unterschiedliche Oberflächen- oder eine andere Art der chemischen oder physikalischen Behandlung der Bleche und/oder der Versteifungsmittel. Hierdurch können Trennwände bzw. Unterdruckbehälter bereitgestellt werden, die unempfindlich gegenüber hohen Temperaturen oder Drücken sind und eine längere Haltbarkeit besitzen.

Ebenfalls betrifft die Erfindung eine Sorptionsmaschine umfassend einen Unterdruckbehälter, der mindestens eine Trennwand und mindestens zwei Kammern umfasst, wobei die Trennwand die Kammern trennt und die beiden Wände der Trennwand bevorzugt an mindestens einem Punkt miteinander verbunden sind, wobei mindestens ein Freiraum in der Trennwand besteht und in dem Freiraum ein Umgebungsdruck vorliegt. Der Freiraum kann somit auch als Luftkammer bezeichnet werden. Vorteilhafterweise ist die Sorptionsmaschine eine Adsorptionsmaschine, insbesondere eine Adsorptionskältemaschine. Kammern im Sinne der Erfindung beschreiben bevorzugt Adsorptions- und Desorptionskammern, Verdampfungskammern und Kondensationskammern. Die Trennwand wird vorteilhafterweise als Trennwand zwischen den Kammern verwendet.

Der durchschnittliche Fachmann ist bisher davon ausgegangen, dass derartige Unterdruckbehälter mit solchen Trennwänden keinesfalls für die Verwendung in Sorptionsmaschinen, insbesondere Adsorptionsmaschinen, verwendet werden können. Bisher sind derartige Trennwände für den genannten Einsatz nicht verwendet worden, da durch die Fachwelt eine Instabilität und Unsicherheit dieser unterstellt wurde. Es hat sich aber herausgestellt, dass auch eine deutlich wahrnehmbare Verformung der Trennwände unter Druckbeaufschlagung bei dem erfindungsgemäßen Unterdruckbehälter insbesondere beim Einsatz in einer Adsorptionskältemaschine nicht zu Funktionsausfällen oder anderen Nachteilen führt. Die Verformung ergibt sich aus dem Anlegen des Unterdrucks und kann daher als Folge von diesem definiert werden. Es kann kostengünstig (im Massenherstellungsverfahren) ein Unterdruckbehälter hergestellt werden, der leicht ist, hohen Drücken widersteht und einfach als im Wesentlichen wartungsfreies Bauteil in eine Sorptionsmaschine integrierbar ist. Somit kann das Gewicht einer Sorptionsmaschine maßgeblich reduziert werden, was insbesondere die Einsetzbarkeit der Sorptionsmaschine erheblich verbessert.

Die Erfindung betrifft auch eine Sorptionsmaschine, umfassend mindestens eine Adsorber-Desorber-Einheit mit Wärmetauscher und Sorptionsmaterial, mindestens einen Kondensator, mindestens einen Kondensator-Wärmetauscher, mindestens eine Verdampfer-Kondensator-Einheit und/oder einen Verdampfer-Wärmetauscher, wobei zumindest ein Teil dieser Baueinheiten in einem erfindungsgemäßen Unterdruckbehälter angeordnet ist und die Sorptionsmaschine Anschluss- und Verbindungselemente sowie Rohrdurchführung zum hydraulischen Verschalten und Betrieb aufweist. Der durchschnittliche Fachmann weiß, welche der oben genannten Baueinheiten er je nach Art der Sorptionsmaschine einzusetzen hat. Die oben genannte Aufzählung stellt eine Gruppe von Baueinheiten dar, aus der-je nach Art der Sorptionsmaschine - einzelne Einheiten zusammengefügt werden können; dem Fachmann ist die Auswahl und das Zusammenfügen der einzelnen Bauteile bekannt.

In einer bevorzugten Ausführungsform der Sorptionsmaschine befindet sich die Adsorber-Desorber-Einheit in Unterdruckbehälter, wobei der Kondensator-Wärmetauscher und der Verdampfer-Wärmetauscher beabstandet von einander angeordnet sind und in ihrem Zwischenraum der Unterdruckbehälter mit der Adsorber-Desorber-Einheit vorgesehen ist. Die zum Kondensator-Wärmetauscher und zum Verdampfer-Wärmetauscher gerichteten Trennflächen des Unterdruckbehälters sowie die Trennwand zwischen der Adsorber- und Desorber-Kammer ist mit einer Trennwand gemäß der oben beschriebenen Art versehen. Es war völlig überraschend, dass die erfindungsgemäße Sorptionsmaschine, insbesondere die Adsorptionskältemaschine durch den Unterdruckbehälter die o. g. Nachteile des Standes der Technik nicht aufweist.

Die Erfindung betrifft auch die Verwendung des erfindungsgemäßen Unterdruckbehälters für Sorptionsmaschinen, insbesondere Adsorptions-Kältemaschinen. In einer besonders bevorzugten Ausführungsform der Erfindung ist vorgesehen, dass in dem erfindungsgemäßen Unterdruckbehälter Baueinheiten angeordnet sind, wobei die Baueinheiten beispielsweise eine Adsorber-Desorber-Einheit, ein Kondensator, ein Verdampfer, eine Kondensator-Verdampfer-Einheit oder eine Verdampfer-Kondensator-Einheit, ein Verdampfer-Wärmetauscher und/oder eine Verdampfer-Kondensator-Einheit sein können.

Der Fachmann weiß, dass Betriebspunkte bestimmte Punkte im Kennfeld oder auf der Kennlinie eines technischen Gerätes, bevorzugt einer Sorptionsmaschine, besonders bevorzugt einer Adsorptionskältemaschine oder Adsorptionswärmemaschine bezeichnen können, die aufgrund der Systemeigenschaften und einwirkenden äußeren Einflüsse und Parameter eingenommen werden. Beispiele hierfür sind die Temperaturen der Wärmesenken und Quellen oder Gesamtvolumenströme im Rückkühlkreis im Verdampfer oder Desorberstrang.

Die Betriebsweise bezeichnet im Sinne der Erfindung bevorzugt die Art und Weise der Betriebsführung der Maschine. Beispiele hierfür sind die Adaption der Zyklenzeiten der Sorptionsmaschine, das heißt, durch kurze Zyklenzeiten kann die Leistung der Maschine erhöht werden, wohingegen längere Zyklenzeiten zu einem höheren Wirkungsgrad führen.

Die eingebauten Komponenten können beispielsweise Adsorber-Wärmetauscher bezeichnen, die mit gleichem Druck aber unterschiedlichen Adsorptionsmaterial versehen sind. Das Adsorptionsmaterial kann vorteilhafterweise unterschiedlich appliziert sein, das heißt es kann sich um eine Schüttung, eine Klebung und/oder Kristallisation handeln. Durch diese unterschiedlichen Applizierungsarten kann die Adsorptionsmaschine an unterschiedliche Anforderungen angepasst werden. So kann die Maschine an den Standort oder das Kältemittel angepasst werden. Außerdem ist die Schichtdicke des Adsorptionsmaterials für die Leistung des Adsorptionsmaterials entscheidend.

Die Anlagenkonfiguration bezeichnet im Sinne der Erfindung bevorzugt die Konfiguration der Maschine, das heißt beispielsweise die interne hydraulische Verschaltung der Komponenten der Maschine, die interne kältemittelseitige Verschaltung der Komponenten oder den geänderten Grundaufbau der Maschine (z. B. Anzahl der Adsorber, Betrieb des Verdampfers, des Kondensators, usw.).

Vorteilhafterweise kann der Unterdruckbehälter für 1-Kammer-Systeme, aber auch für 2- oder Mehrkammer-Systeme mit jeweils nur einem Adsorber oder mehreren Adsorbern einer Sorptionsmaschine, beispielsweise einer Adsorptionsmaschine verwendet werden. Außerdem kann es einfach und schnell auf andere Typen von Sorptionsmaschinen angepasst werden. Die Maschinen müssen hierfür im Wesentlichen nicht apparativ verändert werden.

Vorteile der Erfindung:
• Struktur bildet sich selbst und erst durch die anliegenden Drücke aus (betriebs- oder prozessbedingt)
• Eine Lösung für mechanisches und thermisches Problem
• Durch die sich kompensierenden Kräfte an der Trennwand, muss diese Wand eigentlich nicht unterdruckstabil ausgeführt werden, lediglich die Druckschwankungen und Druckunterschiede zwischen den Kammern müssen bei der Konstruktion berücksichtigt werden
• Ausnutzung der "kostenlosen" Umgebungsdruckkräfte (bzw. Ausnutzung der Vakuumkräfte, die normalerweise immer ein Problem darstellen und GEGEN die immer gearbeitet/konstruiert werden muss)
• Keine zusätzlichen Isolationselemente
• Einfacher Aufbau, Montage, Fertigung
• Universell einsetzbar (Größe, Form der Wand etc.)
• Keine vorgelagerten Prozessschritte wie z.B. Kanten eines Versteifungsprofils, Aufprägen von Sicken
• Sehr hohe Stabilität
• Sehr gute thermische Isolierung
• Verringerte thermische Masse der Trennwand
• Weist nicht die Nachteile des Stands der Technik auf

Die Erfindung soll im Folgenden anhand von Figuren beispielhaft erläutert werden, ohne jedoch auf diese beschränkt zu sein. Es zeigen:
- Fig. 1 u. 2: Varianten des Stands der Technik
- Fig. 3A u. B: Unterdruckbehälter vor und nach der Evakuierung
- Fig. 4: Unterdruckbehälter gemäß des Stands der Technik in einer Sorptionsmaschine
- Fig. 5: Bevorzugter Unterdruckbehälter in einer Sorptionsmaschine

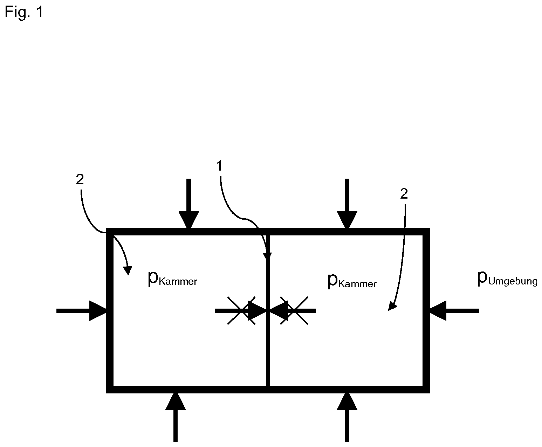

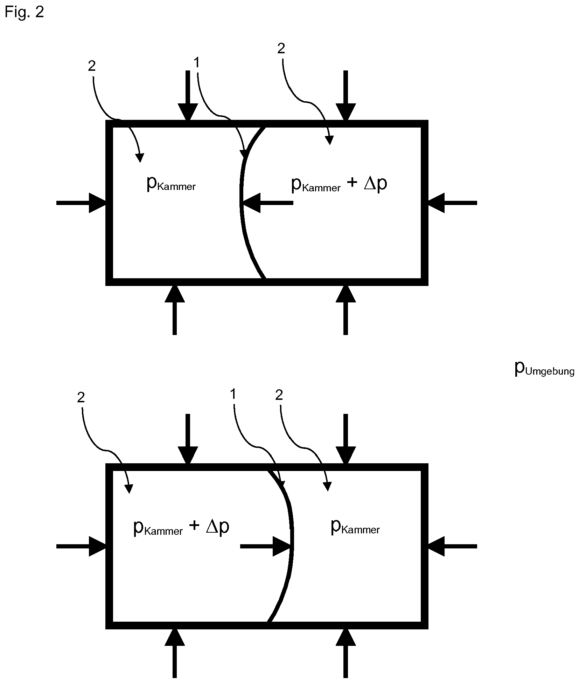

Fig. 1 und Fig. 2 zeigen eine Variante des Standes der Technik. Es ist ein in Unterdruckbehälter mit zwei Kammern 2 dargestellt, die durch eine Trennwand 1 voneinander getrennt sind. Diese Wand 1, die nicht als erfindungsgemäße Trennwand zu bezeichnen ist, wird in der Regel nicht mit hohen Druckkräften (angedeutet mit schwarzen Blockpfeilen) belastet, da sich die Kräfte kompensieren. Falls in einer der Kammern 2 ein höherer Druck (p_{Kammer} + Δp) vorliegt als in der anderen Kammer (p_{Kammer}), kommt es zu einer Verformung der Trennwand 1. Hierdurch kommt es mithin zu Beschädigungen des Unterdruckbehälters und kann zu einem Bersten der Trennwand 1 führen. Dementsprechend müssen nichterfindungsgemäße Trennwände dickwandig und massiv oder mit Versteifungsmitteln versehen werden, um die Verformungen zu vermeiden. Dies führt in der Regel zu einer schlechten thermischen Isolierung zwischen den Kammern und zu einer unerwünschten erhöhten thermischen Masse des Behälters.

Fig. 3A u. B zeigen einen erfindungsgemäßen Unterdruckbehälter vor und nach der Evakuierung. Es wird ein Unterdruckbehälter mit zwei Kammern 2 und einer Trennwand 1 mit zwei Wänden 1.1, 1.2 und einer Verbindung 4 vor und nach der Evakuierung dargestellt. Vor der Evakuierung weist die Kammer 2 einen Druck auf, der mit dem Druck der Trennwand 1 und der Umgebung im Wesentlichen identisch ist. Nach der Evakuierung ist der Druck in dem Freiraum 3 bzw. der Trennwand 1 höher als der in den Kammern 2. Durch die Druckanlegung hat sich die Trennwand 1 verformt und das Volumen der Trennwand 1 bzw. des Freiraums 3 ist vergrößert. Versuche mit dem Unterdruckbehälter führten zu sehr guten Ergebnissen bzgl. mechanischer Stabilität - auch bei hoher Druckwechselbeanspruchung (bis beispielsweise dp = 100mbar). Auch zeigt sich ein positiver Effekt bzgl. der thermischen Isolierung.

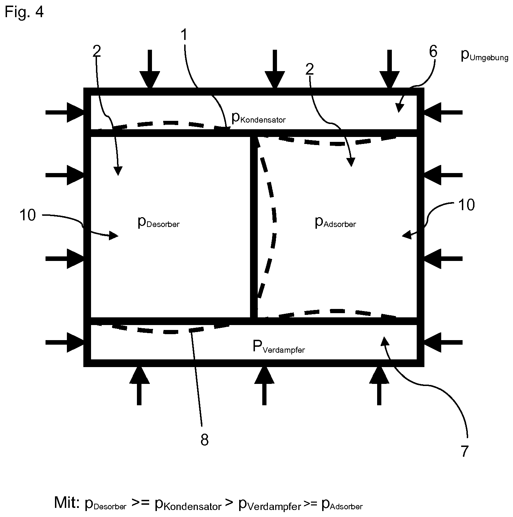

Fig. 4 Unterdruckbehälter gemäß des Stands der Technik in einer Sorptionsmaschine. Die Trennwände 1 in einer Sorptionsmaschine trennen die verschiedenen Bauteile einer Sorptionsmaschine voneinander. Die Sorptionsmaschine kann beispielsweise eine Desorber- / Adsorber-Einheit 10, einen Kondensator 6 und einen Verdampfer 7 aufweisen. Die Desorber- / Adsorber-Einheit weist vorzugsweise zwei Kammern 2 auf. Wenn in den Bauteilen unterschiedliche Drücke vorliegen (z. B. pDesorber >= pKondensator > pVerdampfer >= pAdsorber), kann es zu Verformungen 8 der Trennwände 1 kommen, was ggf. zu Funktionseinbußen führt.

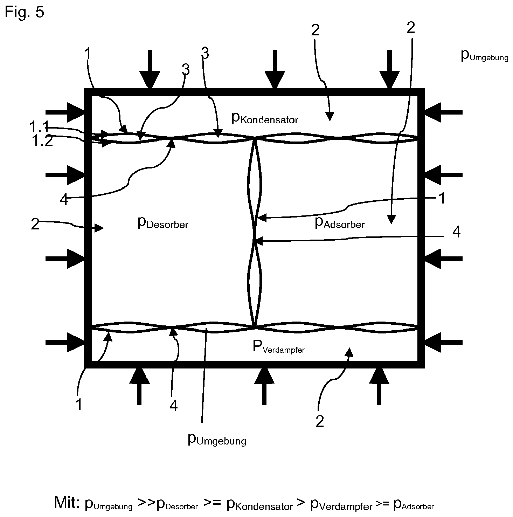

Fig. 5 zeigt einen bevorzugten Unterdruckbehälter in einer Sorptionsmaschine. Die dargestellte Sorptionsmaschine weist einen analogen Aufbau zu der in der Fig. 4 dargestellten Sorptionsmaschine auf. Jedoch ist ein bevorzugter Unterdruckbehälter in diese integriert worden, wobei die Trennwände 1 zwei Wände 1.1, 1.2 aufweisen, die mit einer Verbindung 4 verbunden sind, so dass ein Freiraum 3 zwischen den Wänden 1.1, 1.2 vorliegt. Der Freiraum 3 kann im Sinne der Erfindung auch als Luftraum bezeichnet werden. Nach Anlegen eines Druckes stellt sich eine Verformung der Trennwand 1 ein, eine stabile Struktur gebildet wird. Der Druck in der Trennwand 1 entspricht vorzugsweise dem Umgebungsdruck und ist demnach höher als der in den Bauteilen vorliegende Druck (z. B.: pUmgebung >>pDesorber >= pKondensator > pVerdampfer >= pAdsorber). Das Volumen des Freiraums 3, bzw. der Trennwand 1 kann durch die Verformung vergrößert werden. Um einen Stoffaustausch zwischen den Kammern 2 oder anderen Bauteilen der Sorptionsmaschine zu ermöglichen, können Dampföffnungen in die Trennwände eingebracht werden, so dass beispielsweise eine Dampf von einer in die andere Kammer 2 strömen kann. Die Dampföffnungen beeinflussen jedoch nicht die verbesserte Funktionalität der Ausprägung der Verformung der Trennwand 1.

Die Erfindung löst insbesondere folgendes technisches Problem:
- Realisierung einer hohen mechanischen Stabilität der Trennwand, insbesondere für die Belastung bei unterschiedliche Drücken in den Unterdruckkammern und für schnelle Druckwechselbeanspruchungen, um Verformungen, Zerstörungen etc. zu verhindern
- Thermische Isolierung der Kammern voneinander, um ggf. Wärmeströme zwischen den Kammern zu verhindern
- Reduzierung der thermischen Massen des Behälters

### Bezugszeichenliste

- 1: Trennwand
- 1.1: erste Wand
- 1.2: zweite Wand
- 2: Kammer
- 3: Freiraum
- 4: Verbindung
- 6: Kondensator
- 7: Verdampfer
- 8: Verformung
- 9: Seitenränder
- 10: Adsorber- / Desorber-Einheit

## Patentansprüche

1. Unterdruckbehälter mit mindestens einer Trennwand, wobei die Trennwand (1) mindestens zwei Wände (1.1, 1.2) und der Unterdruckbehälter mindestens zwei Kammern (2) umfasst, wobei die Trennwand (1) die Kammern (2) trennt und die beiden Wände (1.1, 1.2) der Trennwand miteinander verbunden sind, wobei mindestens ein Freiraum (3) in der Trennwand (1) vorliegt, wobei die Trennwand (1) eine sich unter Unterdruck verformende Trennwand (1) ist, wobei die Wände (1.1, 1.2) der Trennwand (1) an mindestens einem Punkt (4) oder Linie verbunden sind **dadurch gekennzeichnet, dass**
der Freiraum (3) einen Druck aufweist, der einem Umgebungsdruck entspricht.

2. Unterdruckbehälter nach Anspruch 1,
wobei die Trennwand (1) mindestens eine Durchführung für eine Strömung zwischen den Kammern aufweist.

3. Unterdruckbehälter nach Anspruch 1 oder 2,
wobei die Wände (1.1, 1.2) der Trennwand (1) stoff- und/oder formschlüssig verbunden sind.

4. Unterdruckbehälter nach einem oder mehreren der vorherigen Ansprüche,
wobei in dem Freiraum ein Fluid vorliegt.

5. Unterdruckbehälter nach einem oder mehreren der vorherigen Ansprüche,
wobei die Wände der Trennwand aus Blech sind.

6. Unterdruckbehälter nach einem oder mehreren der vorherigen Ansprüche,
wobei die Wände eine Stärke von weniger als 3 mm, bevorzugt weniger als 2 mm und besonders bevorzugt weniger als 1 mm aufweisen.

7. Sorptionsmaschine umfassend einen Unterdruckbehälter nach einem der Ansprüche 1 bis 6.

8. Sorptionsmaschine nach Anspruch 7, wobei die Kammern des Unterdruckbehälters eine Adsorber- und eine Desorber-Kammer sind.

9. Sorptionsmaschine nach Anspruch 7 oder 8, wobei die Trennwand (1) durch Anlegen eines Druckes, insbesondere eines Unterdruckes verformt ist.

## Claims

1. Negative-pressure tank having at least one partition, wherein the partition (1) includes at least two walls (1.1, 1.2), and the negative-pressure tank includes at least two chambers (2),
wherein
the partition (1) separates the chambers (2), and the two walls (1.1, 1.2) of the partition are connected to one another, at least one free space (3) being present in the partition (1), wherein the partition (1) is a partition (1) which deforms under negative pressure, wherein the walls (1.1, 1.2) of the partition are connected at at least one point (4) or line, **characterized in that**
the free space (3) has a pressure which corresponds to ambient pressure.

2. Negative-pressure tank according to Claim 1,
wherein
the partition (1) has at least one leadthrough for a flow between the chambers.

3. Negative-pressure tank according to Claim 1 or 2,
wherein
the walls (1.1, 1.2) of the partition (1) are connected in an integrally joined and/or positive-fit manner.

4. Negative-pressure tank according to one or more of the preceding claims,
wherein a fluid is present in the free space.

5. Negative-pressure tank according to one or more of the preceding claims, wherein
the walls of the partition are made of sheet metal.

6. Negative-pressure tank according to one or more of the preceding claims, wherein
the walls have a thickness of less than 3 mm, preferably less than 2 mm, and particularly preferably less than 1 mm.

7. Sorption machine including a negative-pressure tank according to one of Claims 1 through 6.

8. Sorption machine according to Claim 7, wherein the chambers of the negative-pressure tank are an adsorber chamber and a desorber chamber.

9. Sorption machine according to Claim 7 or 8, wherein the partition (1) is deformed by application of a pressure, in particular a negative pressure.

## Revendications

1. Réservoir à vide doté d'au moins une cloison, dans lequel la cloison (1) comprend au moins deux parois (1.1, 1.2) et le réservoir à vide comprend au moins deux compartiments (2), dans lequel la cloison (1) sépare les deux compartiments (2) et les deux parois (1.1, 1.2) de la cloison sont reliées l'une à l'autre, dans lequel la cloison (1) referme au moins un espace libre (3), dans lequel la cloison (1) est une cloison se déformant sous l'effet d'une basse pression, dans lequel les parois (1.1, 1.2) de la cloison (1) sont reliées en au moins un point (4) ou une ligne, **caractérisé en ce que**
dans l'espace libre (3) règne une pression qui correspond à la pression ambiante.

2. Réservoir à vide selon la revendication 1,
dans lequel la cloison (1) présente au moins une traversée pour un écoulement entre les deux compartiments.

3. Réservoir à vide selon la revendication 1 ou 2,
dans lequel les parois (1.1, 1.2) de la cloison (1) sont reliées par complémentarité de matière et/ou de forme.

4. Réservoir à vide selon l'une ou plusieurs des revendications précédentes,
dans lequel l'espace libre renferme un fluide.

5. Réservoir à vide selon l'une ou plusieurs des revendications précédentes,
dans lequel les parois de la cloison sont en tôle.

6. Réservoir à vide selon l'une ou plusieurs des revendications précédentes,
dans lequel les parois ont une épaisseur inférieure à 3 mm, de préférence inférieure à 2 mm et de manière particulièrement préférée inférieure à 1 mm.

7. Machine à sorption comprenant un réservoir à vide selon l'une quelconque des revendications 1 à 6.

8. Machine à sorption selon la revendication 7, dans laquelle les compartiments du réservoir à vide sont un compartiment adsorbeur et un compartiment désorbeur.

9. Machine à sorption selon la revendication 7 ou 8, dans laquelle la cloison (1) est déformée par l'application d'une pression, en particulier d'une basse pression.
